# EUROPEAN PATENT APPLICATION

(11) **EP 4 620 820 A1**
(43) Date of publication of application: **24.09.2025**
(21) Application number: 24305423.6
(22) Date of filing: 21.03.2024
(51) Int. Cl.: B64D 27/02, B64D 27/33, B64D 31/09

(54) **A METHOD OF POWERING A HYBRID AIRCRAFT DURING TAKEOFF**

(71) Applicant: Aura Aero, 31270 Cugnaux (FR)
(72) Inventor: PADULO, Mattia, 32600 ENDOUFIELLE (FR); LIABOEUF, Romain, 31320 AUREVILLE (FR); DARBOIS, Alexandre, 31130 BALMA (FR)
(74) Representative: Plasseraud IP

(57) **Abstract**

It is disclosed a hybrid power architecture and a method of powering said architecture during takeoff, wherein the architecture comprises:
- At least two turbogenerators (11),
- At least one complementary power source (12),
- electric propulsion units (20),
wherein the power sources are sized to deliver a nominal takeoff power, wherein:
- when all electric power sources are operational:
∘ at least two turbogenerators deliver 75% to 90% of the nominal takeoff power Pₙₒₘ, each turbogenerator operating between 90% and 100% of its rated takeoff power, and
∘ at least one complementary source delivers the complement, and operates below 50% of its maximum power, and

- in case of failure of a turbogenerator, a failure mode takeoff power is delivered by:
∘ at least one turbogenerator operating between 90% and 100% of its rated takeoff power, and
∘ at least one complementary source, operating below its maximum deliverable power.

## Description

### TECHNICAL FIELD

The present disclosure relates to a method for powering a hybrid aircraft during takeoff.

### TECHNICAL BACKGROUND

For a propeller-driven aircraft with an internal combustion engine, the maximum thrust that can provide an aircraft for the takeoff phase, which is limited by functional parameters of the aircraft's engine, in particular the maximum internal pressure and maximum operating temperature that the engines can withstand, is determined to guarantee that the aircraft can take off in the most demanding scenario according to its specifications.

Most of the time, during operations, the thrust that is required to enable the aircraft to take-off is lower than the rated thrust. The actual thrust value required for a take-off can be derived from a combination of factors including aircraft take-off weight, runway length, obstacle presence, airport altitude and considered temperature, which may be less demanding than the most critical sizing case.

Additionally, operating an aircraft to provide maximum thrust at take-off may be detrimental to the engine's lifetime, since it causes early fatigue of the engine parts. Consequently, various means have been developed by engine and aircraft manufacturers to achieve take-off at a reduced thrust than what the engines are actually able to provide, in order to save cost through increased engine lifetime and reduced overhaul costs.

A first method is called "derated thrust", which electronically reduces the thrust of the engines to either one or more prespecified values, or by a selectable percentage, of the normal rated thrust.

Another method is called "flexible temperature" or "assumed temperature". This method assumes a hypothetical temperature at which the engines would have to provide the required thrust, where the hypothetical temperature is typically greater than the outside air temperature at takeoff, and sets the thrust to be provided by the engines according to said temperature.

These methods thus enable aircraft engines to last longer and to reduce their maintenance costs.

In order to reduce carbon emissions and mitigate climate change, aircraft embarking alternative power architectures, such as hybrid power architectures, are being developed in order to replace fully fuel-based aircraft. For these kinds of architectures as well, there is a need to operate the components of the power architecture in a way that increases their lifetime and reduces their maintenance costs.

### DESCRIPTION OF THE INVENTION

The present disclosure aims at improving the prior art.

In particular, an aim of the present disclosure is providing a method for powering a hybrid aircraft during takeoff, which enables preserving the service life of the aircraft's power sources. To this end, according to a first object, a hybrid aircraft power architecture is disclosed, comprising:
- a plurality of electric power sources, comprising:
   ∘ At least two turbogenerators, each comprising an internal combustion engine and at least one electrical generator, and
   ∘ At least one complementary electric power source,
- a plurality of electric propulsion units, connected to the plurality of electric power sources,
wherein the plurality of electric power sources are sized to enable the aircraft to takeoff under determined nominal conditions corresponding to a determined nominal takeoff power Pₙₒₘ wherein:
- when all electric power sources are operational, the determined nominal takeoff power (Pₙₒₘ) is delivered by:
   ∘ at least two turbogenerators, delivering 75% to 90% of the nominal takeoff power (Pₙₒₘ) each turbogenerator operating between 90% and 100% of its rated takeoff power, and
   ∘ at least one complementary electric power source delivering the complement, each complementary electric power source operating below 50% of its maximum deliverable power, and
- in case of failure of a turbogenerator during ground acceleration, a failure mode takeoff power (P_{nom,f},) enabling the aircraft to takeoff despite the failure of the turbogenerator is delivered by:
   ∘ at least one turbogenerator operating between 90% and 100% of its rated takeoff power, and
   ∘ at least one complementary power source, each delivering a power comprised strictly between the power it delivers when all electric power sources are operational and its maximum deliverable power.

The complementary electric power sources are typically electric batteries, or any type of electric power source whose service life is significantly deteriorated when used at their maximal power.

The proposed hybrid aircraft power architecture is thus a series-hybrid architecture, wherein the electric power sources are sized such that, during takeoff, the electric complementary power sources are operated in low power ranges. Thus, the service life of these power sources is extended.

In embodiments, the determined nominal conditions include a maximum aircraft takeoff weight, a nominal takeoff distance, a theoretical ambient temperature and altitude.

In embodiments, wherein each complementary electric power source is a battery.

In embodiments, the architecture comprises two turbogenerators and four batteries.

In embodiments, the architecture further comprises a controller configured to operate the electric power sources to deliver a determined takeoff power (Pₜₒₜ).

In embodiments, the controller is configured to operate the electric power sources to deliver a takeoff power (Pₜₒₜ) selected among a nominal takeoff power (Pₙₒₘ) and a reduced takeoff power (P_{red}),
and the architecture further comprises a pilot-actuatable control device enabling selection by the pilot of the takeoff power among the nominal takeoff power and the reduced takeoff power. The pilot-actuatable control device may be integrated within the throttle of the aircraft.

In embodiments, the architecture further comprises a Human-Machine Interface located within the cockpit and enabling input, by a pilot, of a reduced takeoff power value.

The selection between nominal takeoff power and reduced takeoff power may therefore remain the choice of the pilot, and the pilot may switch back from reduced takeoff power to nominal takeoff power during takeoff in case of adverse conditions or unexpected behavior of the aircraft.

According to another object, it is disclosed an aircraft comprising a hybrid power architecture according to the description above.

According to another object, it is disclosed a method for powering an aircraft during takeoff, wherein the aircraft comprises a hybrid power architecture according to the description, above, the method comprising operating the electric power sources during takeoff as follows:
- when all electric power sources are operational, the power sources are operated to deliver a determined takeoff power (Pₜₒₜ), said determined takeoff power being delivered by:
   ∘ at least two turbogenerators, each operating between 90% and 100% of its rated takeoff power, and
   ∘ at least one complementary electric power source operating below 50% of its maximum deliverable power, and
- in case of failure of a turbogenerator during ground acceleration, the power sources are operated to deliver a failure mode takeoff power said failure mode takeoff power being delivered by:
   ∘ at least one turbogenerator operating between 90 and 100% of its maximum deliverable power on the ground, and
   ∘ at least one complementary power source, each delivering a power comprised strictly between the power it delivers when all sources are operational and its maximum deliverable power.

In embodiments, the determined takeoff power (Pₜₒₜ) is a nominal takeoff power (Pₙₒₘ) corresponding to nominal takeoff conditions.

In embodiments, the determined takeoff power (Pₜₒₜ) is a reduced takeoff power (P_{red}), determined from an actual ambient temperature, actual runway altitude, actual aircraft takeoff weight for the considered flight, available runway length and any obstacle presence.

In embodiments, the determined takeoff power (Pₜₒₜ) is a reduced takeoff power, and the method comprises operating the electric power sources such that:
- in normal operation, the reduced takeoff power (P_{red}) is delivered by:
   ∘at least two turbogenerators, each operating between 90% and 100% of its maximum deliverable power on the ground, and
   ∘ at least one complementary electric power source, each operating below 40% of its maximum deliverable power, and
- in case of failure of a turbogenerator, a failure mode takeoff power is delivered by:
   ∘ at least one turbogenerator operating between 90% and 100% of its maximum deliverable power on the ground, and
   ∘ at least one complementary power source, each delivering a power comprised strictly between the power it delivers in normal operation and its maximum deliverable power.

In embodiments, the method comprises a step of receiving a reduced takeoff power value input by a pilot, and receiving a request to operate takeoff at the received reduced takeoff power value.

The electric power sources may thus be operated to deliver a reduced takeoff power that is determined from actual takeoff conditions (aircraft takeoff weight, ambient temperature, airport's altitude, available take-off distance, etc.). In that case, the turbogenerators are nevertheless operated within the same range of powers, and the power delivered by the complementary power sources is reduced, thereby even more extending their service life.

In embodiments, in case of failure of a turbogenerator, the power delivered by the at least one complementary power source is equal to a value enabling the aircraft to takeoff despite the failure of the turbogenerator within a distance equal to the takeoff distance without the turbogenerator failure, increased by a regulatory margin applied to the takeoff distance with all engines operating by the ASTM F3179-20 Standard Specification for Performance of Aircraft.

In embodiments, in case of failure of a turbogenerator, the power delivered by the at least one complementary power source is equal to a value enabling the aircraft to takeoff despite the failure of the turbogenerator within a distance equal to the takeoff distance without the turbogenerator failure, increased by 15%.

European Aviation Safety Regulations (EASR) and Federal Aviation Regulations (FAR) are sets of rules governing aviation activities in Europe and the United States, respectively. According to these European and US rules, a number of constraints shall be considered for the determination of the suitable takeoff performances of an aircraft. Among those, the takeoff distance of an aircraft, on a dry runway and for given operational conditions of temperature, pressure altitude, weight, etc., is defined as the greater of the following distances:
- 115% of the horizontal distance from the start of the takeoff to the point at which the aircraft is 11 m [35 ft] above the takeoff surface with all engines operative. This distance, including the 15% margin, is called TOD_AEO.
- The distance covered from the brake release to a point at which the aircraft is at 11 m [35 feet] above the takeoff surface, assuming the critical loss of thrust occurs at speed V_{EF} and is recognized at speed V₁. This distance is called TOD_OEI.

Such distance must not exceed the available take off distance (TODA), which is the cumulative length of the runway and the clearway, if the latter exists. Further, V_{EF} is the calibrated airspeed at which a critical engine is assumed to fail. As used herein, this speed corresponds to the speed at which a critical loss of thrust, due to default of a turbogenerator, is assumed to happen.

V₁ is the maximum speed at which the crew can decide to safely continue or reject the takeoff, and, in the latter case, is ensured to stop the aircraft within the limits of the runway.

According to the claimed embodiment, a series-hybrid aircraft is propelled by multiple electric propulsion units, and powered during takeoff by using turbogenerators and at least a complementary power source, wherein the power of the complementary power source in case of failure of a turbogenerator is limited to a maximum value at which the TOD_OEI (including critical loss of thrust) is equal to TOD_AEO.

Accordingly, the power delivered by the battery is intentionally limited even in case of failure of a turbogenerator, which enables optimizing the available energy from the battery and preserving its service life.

On the other hand, since TOD_OEI equals TOD_AEO, this method of operation has no detrimental impact on the takeoff distance of the aircraft.

### DETAILED DESCRIPTION OF THE DRAWINGS:

The present disclosure is illustrated by way of example, and not by way of limitation, in the figures of the accompanying drawings, in which like reference numerals reference to similar elements and in which:

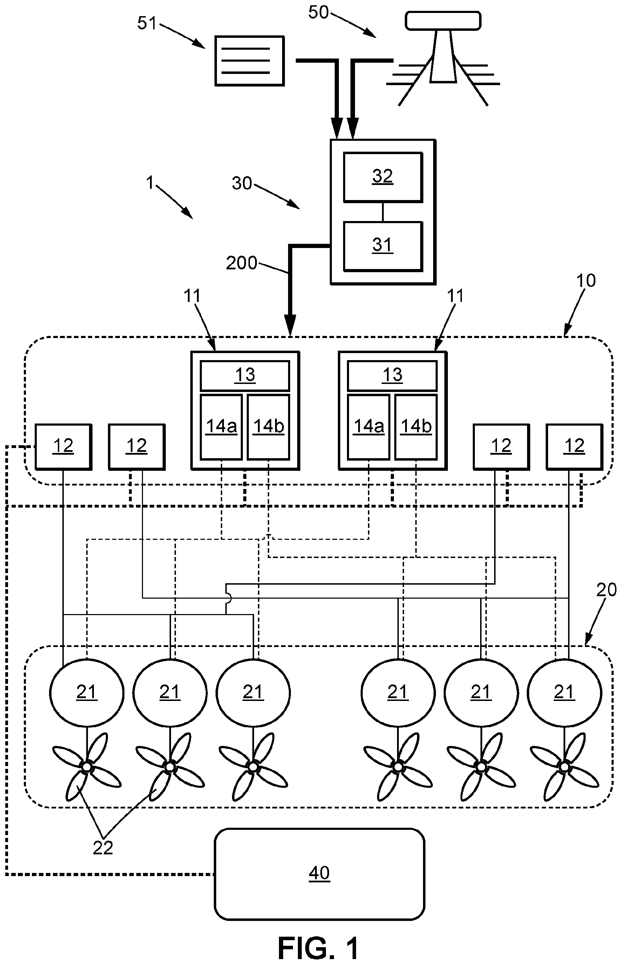

- Figure 1 schematically represents a hybrid aircraft architecture according to an embodiment.

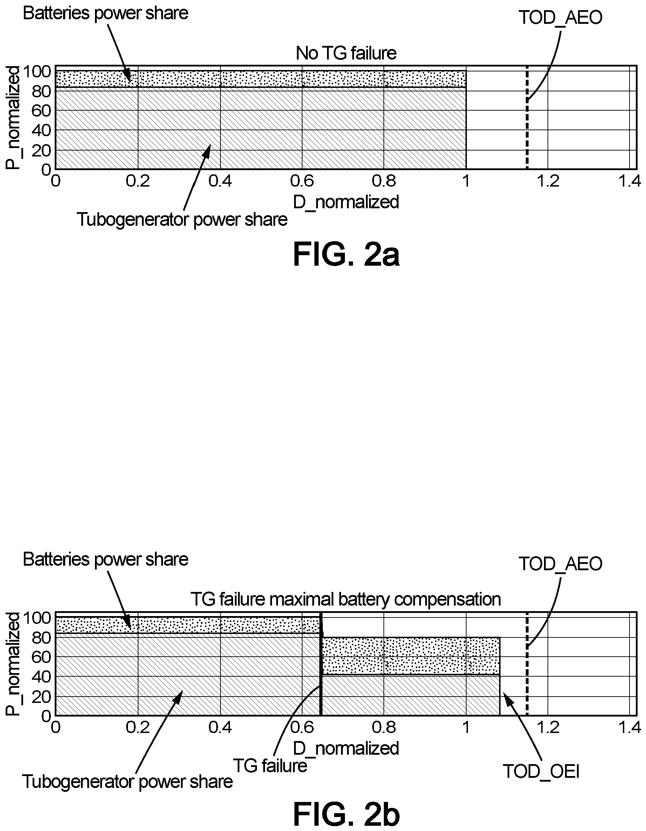

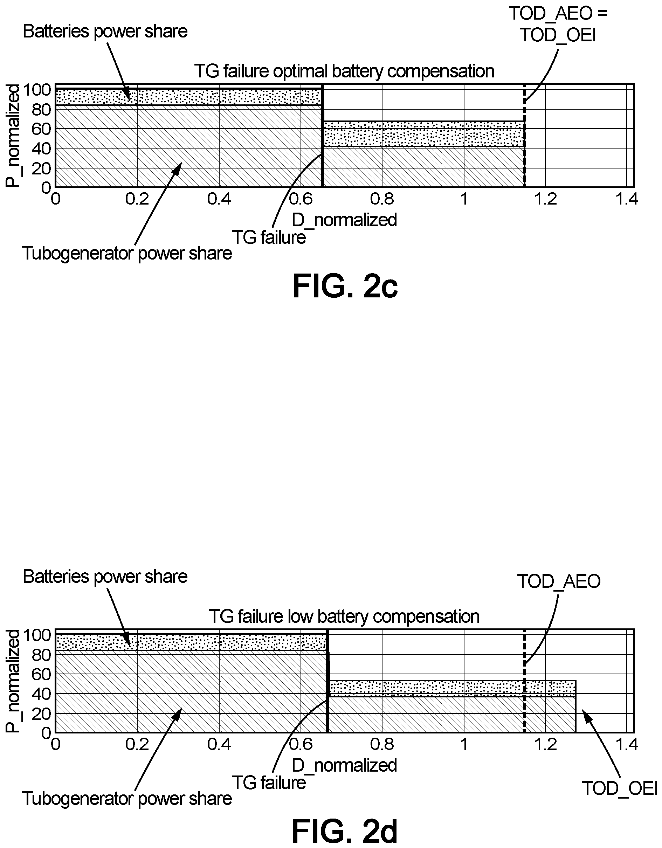

- Figures 2a to 2d represent respective shares of a takeoff nominal power delivered by turbogenerators and batteries and the corresponding takeoff distance of the aircraft, respectively in normal operation (Fig. 2a), with a turbogenerator failure and maximal battery compensation (Fig. 2b), with a turbogenerator failure and medium battery compensation (Fig. 2c), and with a turbogenerator failure and low battery compensation (Fig. 2d). On these figures, the X axis corresponds to a normalized distance, i.e. a distance divided by the horizontal distance, from the start of the takeoff (brake release) to the point at which the aircraft is 11 m above the takeoff surface, with all engines operative in nominal power rating. The Y axis corresponds to a normalized power, i.e. the power provided by the totality of the power sources divided by the nominal takeoff power Pₙₒₘ.

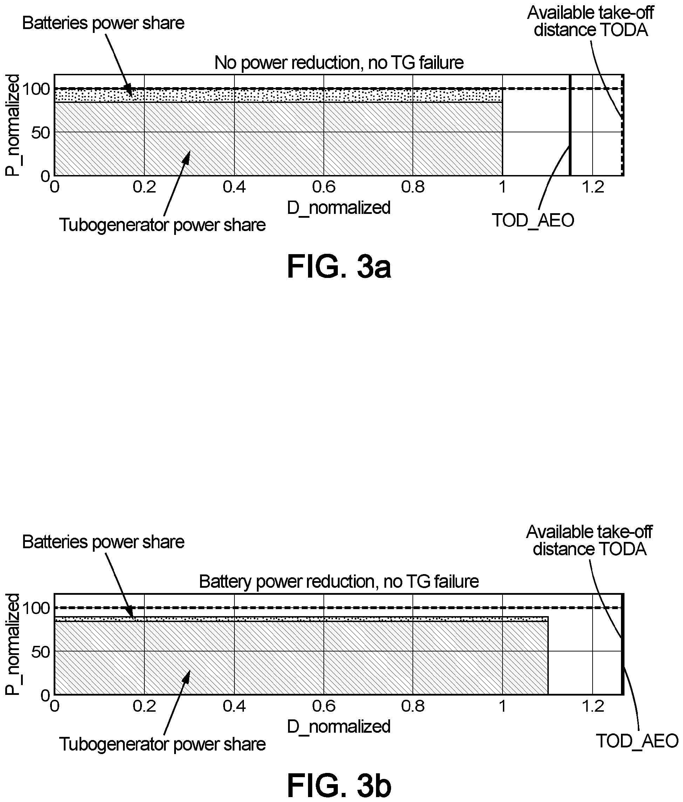

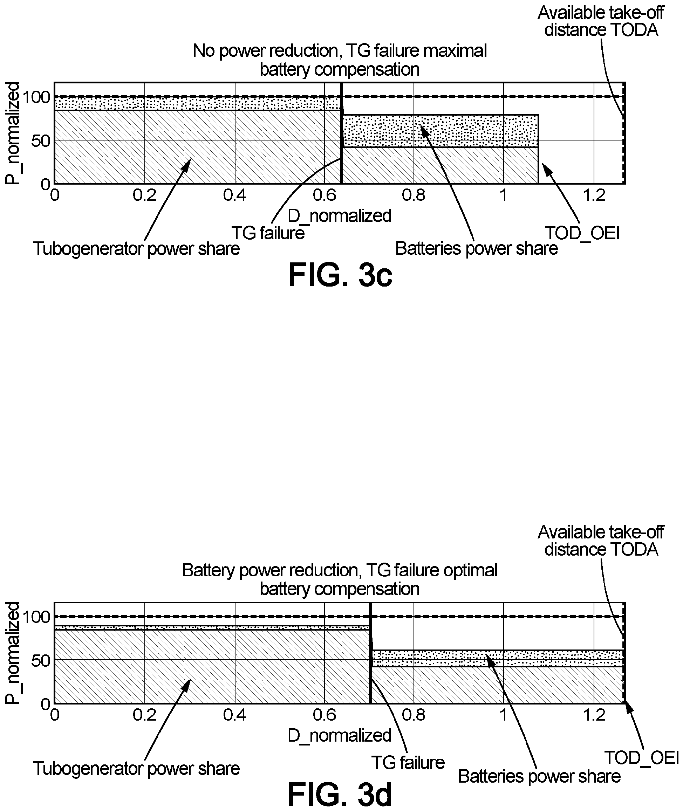

- Figures 3a to 3d represent respective shares of a takeoff power delivered by turbogenerators and batteries for nominal power takeoff (fig. 3a and fig. 3c) and reduced power takeoff (fig. 3b and 3d) respectively in normal operation (Figures 3a and 3b) and in case of failure of a turbogenerator (figures 3c and 3d). In these figures as well, the X axis represents a normalized and the Y axis represents a normalized power, distance, with the same normalizations as in figures 2a to 2d.

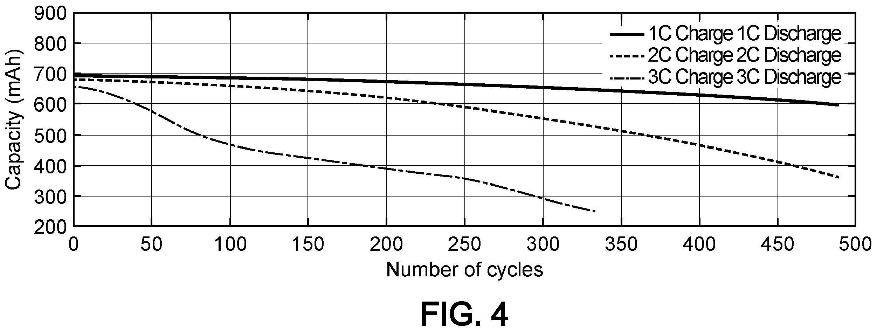

- Figure 4 is a series of curves representing the capacity of a battery versus the number of cycles under different discharge rates.

### DETAILED DESCRIPTION OF EMBODIMENTS

A hybrid aircraft power architecture and method for powering an aircraft during takeoff will now be described.

With reference to figure 1, the hybrid aircraft power architecture 1 is a series hybrid architecture comprising a plurality of electric power sources 10, feeding with electrical power a plurality of electric propulsion unit 20, and a plurality of non-propulsive electric systems or appliances 40. The plurality of electric power sources 10 comprises at least two turbogenerators 11, and at least one complementary power source 12. The at least one complementary power source 12 can include one or more batteries, such as for instance lithium-ion batteries . Other types of complementary power sources may be contemplated. The disclosed architecture and method is however of particular relevance for complementary power sources which undergo premature aging when they are operated to deliver an electric power close to their maximum deliverable power, which is the case of electric batteries.

Each turbogenerator comprises an internal combustion engine 13. Each internal combustion engine may for instance be a turbomachine or a piston engine, and is configured to generate mechanical power from combustion of fuel. Each internal combustion engine typically comprises an output shaft (not shown).

Furthermore, each turbogenerator comprises at least one electrical generator 14 configured to convert mechanical power of the output shaft into electrical power. In embodiments, and as represented in the example of figure 1, each turbogenerator comprises two electrical generators 14a, 14b, each electrical generator being configured to convert mechanical power of the output shaft of the internal combustion engine 13 into electrical power. In embodiments, each turbogenerator comprises an even number, greater than two, of electrical generators.

In embodiments, the number of turbogenerators 11 may be greater than 2, for instance the architecture may comprise four turbogenerators. The number of complementary power sources 12 may also be greater than two, for instance equal to 3 or 4.

For instance, the architecture may comprise two turbogenerators 11 and four electric batteries 12.

Each propulsion unit 20 comprises an electrical motor 21, configured to convert electrical power provided by one or more of the power sources, into mechanical power, and a propeller 22, rotatably driven by said motor.

In embodiments, each propulsion unit 20 may be connected to at least two turbogenerators 11, and to at least a complementary power source 12, enabling the propulsion unit 20 to be selectively fed with electrical power by any subset among said at least two turbogenerators 11 and complementary power source 12, which results in a decoupling between power production and propulsion. For instance, all propulsion units 20 may be provided with electrical power delivered by one or two turbogenerators 11, optionally complemented with electrical power provided by the complementary power source(s) 12.

The non-propulsive electric systems 40 encompass any system that requires electrical power for its operation, and which do not contribute to aircraft propulsion. These may include one or more of the following:
- Avionics systems: all electronic devices and systems used for navigation, communication, and monitoring of the aircraft and its environment. This includes but is not limited to navigation computers, cockpit displays, communication radios, radar systems, transponders, and flight control system (including flight control computers, sensors, and cockpit inceptors)
- Electric actuators, such as those that may be required to move flight control surfaces, to retract and extend the landing gear, to brake, to operate the doors
- Lighting systems, such as navigation lights, landing lights, taxi lights, and cabin lighting.
- Environmental Control System (ECS), for maintaining a comfortable and safe environment within the aircraft cabin. It includes systems for air conditioning, pressurization, and heating, all of which require electrical power.
- Emergency Systems, which may include emergency lighting, emergency oxygen systems, and other safety-critical equipment.
- Anti-Icing/De-Icing Systems,
- Communication Systems, apart from avionics, such as intercoms and public address systems within the aircraft.
- Cabin Systems: may include galley equipments (ovens, coffee makers, refrigerators,...), plus various amenities such as power outlets for passengers, in-flight entertainment systems, which may include displays, audio systems, and Wi-Fi connectivity.

In embodiments, the non-propulsive electrical systems 40 are also connected to said at least two turbogenerators 11 and to at least a complementary power source 12, also enabling that these non-propulsive systems be fed with electrical power by various subsets of said electric power sources. Alternatively, non-propulsive electric power may be provided by a specifically dedicated power source (not shown).

According to a particular embodiment represented in figure 1, the architecture 1 may comprise an even number of propulsion units 12, with the propellers 22 being symmetrically disposed on the wings with respect to the fuselage of the aircraft. Further, when the turbogenerators 11 each comprise two electrical generators 14, two groups comprising the same number of propulsion units 20 may be defined, and the two electrical generators of each turbogenerator may be connected respectively to a respective group of electrical propulsion unit. This is a way to ensure that each turbogenerator is indeed able to deliver electrical power to both groups of propulsion units.

The architecture further comprises at least one controller 30, configured to operate the electric power sources to deliver a determined power. The controller 30 may comprise one or more processors 31 and storage means 32 (magnetic hard disk, optical disk, electronic memory, or any computer readable storage medium) in which a computer program product is stored, in the form of a set of program-code instructions to be executed in order to implement all or part of the steps described below. Alternatively, or in combination thereof, the controller 30 can comprise one or more programmable logic circuits (FPGA, PLD, etc.), and/or one or more specialized integrated circuits (ASIC), etc., adapted for implementing all or part of said steps. In other words, the controller 30 comprises a set of means configured by software (specific computer program product) and/or by hardware (processor, FPGA, PLD, ASIC, etc.).

The controller 30 may be embarked on board the aircraft, and may receive instructions in particular from the throttle 50 of the aircraft, which is actuated by the pilot. The throttle enables the pilot to control the amount of thrust of the aircraft, and hence the amount of power delivered by the power sources to enable the electrical propulsion units 20 to deliver said thrust. The controller is thus configured to translate the pilot's actuation of the throttle into a command for the electrical propulsion units and to determine a suitable power split among the power sources.

In order for the aircraft to takeoff, a nominal takeoff power Pₙₒₘ is determined, corresponding to determined nominal conditions for the takeoff.

These nominal conditions are theoretical conditions which are set as the most power-intensive conditions (i.e. the most adverse conditions for a takeoff) that the aircraft would meet during its service life. They notably include determined values of takeoff weight, ambient temperature at takeoff, takeoff distance, altitude etc. For instance, the takeoff weight is the maximum takeoff weight of the aircraft, the takeoff distance is the minimum takeoff distance defined in top level aircraft requirements, the ambient temperature is defined by a given deviation with respect to standard conditions at a given altitude.

The nominal takeoff power Pₙₒₘ is sized at aircraft development stage, and has a constant value that does not depend on the actual conditions of the takeoff. The most demanding conditions determine the maximal thrust that can be delivered by the Electrical Propulsive Units and hence the maximal power that can be delivered by the electrical motors at the given condition.

The nominal takeoff power Pₙₒₘ is thus a power value which enables satisfying at least the propulsive needs, i.e. the needs of the electrical motors for actuating the propellers in order to ensure takeoff in the above-mentioned conditions. When the non-propulsive devices are not powered by a dedicated power source, but are instead powered by the electric power sources described above, the nominal takeoff power is determined to also satisfy the non-propulsive needs, i.e. the needs of all non-propulsive systems that operate in the aircraft during takeoff.

According to the present disclosure, the power sources 10 are sized so that the turbogenerators 11 can take a significant portion of the nominal takeoff power Pₙₒₘ, said portion ranging from 75% to 90% of the takeoff nominal power Pₙₒₘ, without the turbogenerators exceeding their operational limitations, while the complementary power sources 12 can supply the complement to 100% of Pₙₒₘ, without exceeding their operational limitations.

By "without the turbogenerators exceeding their operational limitations", it is meant that the turbogenerators operate at a power level below or equal to 100% of their rated takeoff power. The rated takeoff power refers to the maximum power output that the turbogenerator can deliver during the takeoff phase of flight, under standard conditions specified by the manufacturer, and is determined by various factors including for instance engine design, temperature and altitude. In emergency situations, turbogenerators can operate at a higher power level corresponding to an emergency rating, which can amount, for instance, to 110% of the rated takeoff power.

By "the complementary power sources not exceeding their operational limitations", it is meant that the complementary power sources, in particular batteries, operate at a level below or equal to 50% of their maximum deliverable power, in particular their maximum continuous deliverable power, preferably below 40%, and even more preferably below 30% of said power. When the complementary power sources are batteries, each battery is associated to a determined energy capacity which is typically expressed in watt-hours or ampere-hours, and may deliver a variable power according to the discharge rate that is applied, the discharge rate being the rate at which the battery releases the stored energy. Therefore, the maximum continuous deliverable power corresponds to the maximum power that a battery may deliver in continuous operating conditions, as opposed to a pulse deliverable power. In what follows, the maximum deliverable power mentioned regarding a complementary power source will be interpreted, when said source is a battery, as a continuous maximum deliverable power.

The discharge rate is given by the battery capacity divided by the number of hours it takes to discharge the battery. Hence, the maximum electric power deliverable by the battery may be expressed as a maximum discharge rate.

Thus, each battery may operate under a discharge rate that is below 50%, and preferably below 40 % and even 30%, of its maximum discharge rate.

In other words, the power sources are sized such that, in normal operation, i.e. when all electric power sources are operational, each turbogenerator delivers an electric power comprised between 90% and 100% of its takeoff rated power, and preferably between 95 and 100% of its takeoff rated power, for instance equal to its takeoff rated power, and each complementary electric power source delivers an electric power which is below 50% of its maximum deliverable power, in particular its maximum continuous deliverable power, preferably below 40%, even more preferably below 30% of said power.

The actual split of power between the turbogenerators and complementary power sources is determined by the controller 30, based on the nominal power value Pₙₒₘ, and environmental variables such as altitude, temperature, under the constraint that each type of power sources operates below its operational limitations, as mentioned above.

Additionally, according to EASR and FAR regulations, it is required that the aircraft shall still be able to takeoff even in the presence of a critical loss of thrust during takeoff. Considering the assumption that the electric power source with highest deliverable power is a turbogenerator, such critical loss of thrust corresponds to the failure of a turbogenerator.

Then, the electric power sources are also sized such that, in case of failure of a turbogenerator during takeoff/ground acceleration, the remaining electric power sources may still deliver a failure mode takeoff power P_{nom,f} enabling the takeoff to occur despite the failure of the turbogenerator, wherein the failure mode takeoff power is delivered by:
- at least one turbogenerator, operating between 90% and 100% of its takeoff rated power, and preferably between 95% and 100% of its takeoff rated power, and
- at least one complementary power source, each delivering a power value that is greater than power it delivers in normal operation, but strictly less than its maximum deliverable power (in particular its maximum continuous deliverable power).

In embodiments, the level of power delivered by the complementary power sources 12 is adapted such that, in case of failure of a turbogenerator 11, the takeoff distance TOD_OEI of the aircraft is equal at most to, and preferably equal to TOD_AEO, i.e. the nominal takeoff distance, increased by a regulatory margin (typically equal to 1.15), considering the take-off distance as the distance covered from the brake release to a point at which the aircraft is at 35 feet (10,67m) above the takeoff surface. The mentioned regulatory margin is defined in section 10 "Take-off Distance and Takeoff Run", in particular 10.1.1 of ASTM F3179-20: Standard Specification for Performance of Aircraft, used as Acceptable Means of Compliance by EASA CS23 and FAA FAR 23.

The longer the takeoff distance, the lower is the power share provided by the complementary power source(s).

Hence, the sizing of the power sources may be such that in case of failure of a turbogenerator, the remaining sources are able to deliver a failure mode takeoff power P_{nom,f}, enabling the aircraft to takeoff within the nominal takeoff distance increased by the regulatory margin, TOD_AEO, said power being delivered by :
- at least one turbogenerator operating between 90 and 100% of its rated takeoff power and,
- the complementary power sources, each operating below 80% of its maximum deliverable power, in particular its maximum continuous deliverable power, preferably below 60%, for instance below 50% of said power.

Here again, when the complementary power sources 12 are batteries, this corresponds to a reduced discharge rate as compared to the battery's maximum discharge rate.

With reference to figure 4, are shown curves representing the capacity of a lithium battery versus the number of cycles under different discharge rates, as published by Peng Zhang et al. in "An Overview of Different Approaches for Battery Lifetime Prediction" in IOP Conference Series Materials Science and Engineering, 199(1):012134, May 2017.

These curves show the rapid degradation of the battery capacity, and hence its service life, with an increase in the charge and discharge rate (considered equal in the figure).

Accordingly, the sizing of the electric power sources is adapted to prevent the complementary power sources to operate, whether the takeoff is performed under nominal conditions or under a critical situation of failure of a turbogenerator, at their maximum deliverable power, and thereby strongly affecting the service life of these sources. Indeed, even though takeoff represents only a minor part of an aircraft operating time, short peaks of requested power may strongly impair the service life of batteries.

With reference to figure 2a, is shown an example of split of a nominal takeoff power Pₙₒₘ between a set of two turbogenerators and a set of four batteries, when all power sources are operative.

The length of the blocks representing power delivered by each type of power source, corresponds to the normalized takeoff distance, i.e. the takeoff distance of the aircraft, divided by the horizontal distance, from the start of the takeoff (brake release) to the point at which the aircraft is 11 m above the takeoff surface, with all engines operative.

The dotted line represents the takeoff distance with all engines operative, increased by a regulatory margin which, at the time of filing of the present application, is equal to 15 %, which is denoted TOD_AEO.

According to this example, the part of the nominal takeoff power provided by the two turbogenerators is greater than 80%, meaning that each turbogenerator provides about 40% of the nominal takeoff power, while operating between 90 and 100 % of its rated takeoff. The remainder, of less than 20% of the nominal takeoff power, is provided by the batteries, which all operate below 50% of their maximum deliverable power.

With reference to figures 2b to 2d are shown various scenarios of critical failure, i.e. of a turbogenerator failure, with respectively maximal, optimal and low compensation amounts by the batteries. One can notice that the takeoff distance increases, as compared to the takeoff distance when all power sources are operative, since the total available power is reduced. Furthermore, the more power is delivered by the battery, the shorter the takeoff distance. One can notice, in figure 2b, that when a maximal compensation is asked from the batteries, thereby delivering their maximum deliverable power, the takeoff distance does not reach the TOD_AEO distance.

However, as visible in figures 2c and 2d, when less power is delivered by the batteries, the take-off distance in case of turbogenerator failure increases until reaching, or exceeding, said distance TOD_AEO.

Therefore, according to the embodiment disclosed above, the power sources may be sized such that the distance TOD_OEI in case of failure of a turbogenerator equals TOD_AEO, which is the case represented in figure 2c, while the power delivered by each complementary power source remains below the maximum deliverable power, and preferably below 80 %, and even more preferably below 60% of the maximum deliverable power.

According to a non-limiting example, for an aircraft in the 19 seater category, limited to a takeoff weight of 8.6 tons, taking off from a notional 800m runway (dry, "ISA" - International Standard Atmosphere - conditions) may require a nominal takeoff power of 1800KW, to be provided to propellers by electrical motors.

A typical sizing of the power supply sources can be as follows:
- two turbogenerators 12, each providing 800kW at sea level, ISA conditions,
- Four battery packs, each providing 50kW at a discharge rate of 1C, with a maximum discharge rate of 5C.

Furthermore, according to embodiments of a method of powering an aircraft during takeoff, using the above-described hybrid power architecture, the electric power sources are operated during takeoff as follows:
- when all electric power sources 10 are operational, they are operated to deliver a determined takeoff power Pₜₒₜ, which may be equal to the nominal take-off power Pₙₒₘ, or may be a reduced value P_{red}, said determined takeoff power being delivered by:
   ∘ at least two turbogenerators, each operating between 90% and 100% of its rated takeoff power, and
   ∘at least one complementary electric power source operating below 50% of its maximum deliverable power, and
- in case of failure of a turbogenerator during takeoff/ground acceleration, the power sources are operated to deliver a failure mode takeoff power, being delivered by:
   ∘ at least one turbogenerator operating between 90 and 100% of its rated takeoff power, and
   ∘ at least one complementary power source, each delivering a power comprised strictly between the power it delivers when all sources are operational and its maximum deliverable power, in particular its maximum continuous deliverable power.

The reduced takeoff power P_{red} may be determined from actual takeoff conditions, comprising in particular:
- an actual takeoff weight of the aircraft, which is typically lower than the maximum takeoff weight considered for the nominal power,
- an actual available takeoff distance TODA, which may be longer than the length considered for the nominal power,
- an actual ambient temperature,
- actual wind conditions,
- presence of surrounding obstacles in the vicinity of the runway (trees, hills, antennas...).

It is therefore a power value which is determined on a case-by-case basis according to the specific conditions of the takeoff. The reduced value P_{red} is lower than the nominal value Pₙₒₘ, but, when provided by the electric power sources, still enables the aircraft to takeoff within the available takeoff distance TODA, and with the other actual takeoff conditions.

Hence, when the determined takeoff power is the nominal takeoff power Pₙₒₘ, then the power delivered by each type of power source is in the respective ranges disclosed above, for which the power sources have been sized (i.e. between 90 and 100%, and preferably between 95 and 100% of the rated takeoff power for turbogenerators, and below 50%, preferably below 40%, preferably below 30% for the complementary power sources).

However, when the determined takeoff power is the reduced takeoff power P_{red}, the different types of power sources may be operated at a lesser level, such as:
- When all sources are operational, the reduced takeoff power may be delivered, in normal operation, by:
   ∘ at least two turbogenerators, each operating between 90% and 100% of its rated takeoff power, and
   ∘ at least one complementary electric power source operating below 40% of its maximum deliverable power, (in particular its maximum continuous deliverable power) preferably below 30%, preferably below 20%.

Furthermore, in case of failure of a turbogenerator, the sources may be operated to deliver a failure mode reduced takeoff power P_{red,f} enabling the aircraft to takeoff despite the failure, wherein said power is delivered by:
- at least one turbogenerator operating between 90% and 100% of its rated takeoff power, for instance at least 95% of its rated takeoff power, and
- at least one complementary power source, each delivering a power comprised strictly between the power it delivers in normal operation and its maximum (continuous) deliverable power.

As mentioned previously, the total power level, and hence the level of power delivered by the complementary power sources, is related to the takeoff distance of the aircraft. Hence, in case of failure of a turbogenerator, the complementary power sources are preferably operated such that the takeoff distance does not exceed, and preferably equals, the takeoff distance in normal operation increased by the regulatory margin, i.e. 15%. Each complementary power source may thus be operated at a power level defined such that the takeoff distance despite the turbogenerator failure, (TOD_OEI) equals the takeoff distance when all power sources are operational, increased of the regulatory margin (TOD_AEO).

The reduced takeoff power P_{red}, once determined, may be expressed in various ways. Preferably, it is represented with a percentage of the power reduction with respect to the nominal takeoff power Pₙₒₘ. It shall be provided to the controller 30 by the pilot. The pilot may for instance rely on predetermined charts for determining a relevant reduced takeoff power P_{red} for a flight according to the flight's specific conditions. Alternatively, it may also be expressed as an absolute power value, or by an indicative level selected among a finite list.

To this end, the above-disclosed architecture 1 may comprise a Human-Machine interface 51 enabling said entry by the pilot, and communicating said entry to the controller 30. Preferably, this pilot interface is integrated in the cockpit displays and may be, for instance, a touchscreen or any other input device enabling the pilot to enter the reduced power value P_{red}.

In embodiments, the selection between the nominal takeoff power Pₙₒₘ and a reduced takeoff power P_{red} may also be performed by the pilot. To this end, the above-disclosed architecture comprises a pilot-actuatable device enabling said selection by the pilot. Preferably, this pilot-actuatable device is integrated within the throttle 50 of the aircraft.

Thus, the pilot may input, using the Human-Machine Interface 51, a reduced takeoff power value P_{red}, and select, by the pilot-actuatable device 50, to effectively perform the takeoff under said reduced power. This may all be performed before takeoff. The pilot-actuatable device 50 enabling selection between reduced and nominal takeoff power may also be used by the pilot, during the whole takeoff, to switch back to the nominal value Pₙₒₘ, for instance in case of unexpected behavior of the aircraft. The controller 30 may thus receive an input from the Human-Machine Interface 51 comprising the reduced takeoff power value provided by the pilot and a request, from the pilot-actuatable device 50, to implement the takeoff under the reduced takeoff power, to effectively operate the power sources accordingly. It further may switch operation of the sources back to nominal takeoff power upon receipt, from the device 50, of a corresponding request.

The reduced takeoff power enables operating each type of power source, and in particular the complementary electric power sources, at a lesser power level as compared to the nominal power, and hence further increasing the service life of these sources.

With reference to figures 3a to 3d, are shown other examples of shares of a takeoff power in different scenarios. As in figures 2a to 2d, the length of the blocks along abscissae axis represents a normalized takeoff distance of the aircraft, and the dotted or full line on the righthand side of the figures represents the available takeoff distance TODA.

Figure 3a is the same scenario as figure 2a, i.e. a takeoff in nominal conditions, with all power sources operational and delivering the nominal takeoff power.

In figure 3b, is shown a reduced takeoff power delivered by the power sources. One can notice that the share of the turbogenerators actually does not change, but the power reduction is to the benefit of the complementary power source. One can also notice that this power reduction increases the takeoff distance, but it remains within the available takeoff distance TODA.

In figure 3c is shown the same case as in figure 2b, i.e. the case of normal operation, starting under an initial nominal power, with failure of a turbogenerator (occurring at V_{EF}), and a maximal compensation from the electric power sources. One can notice that said maximum compensation enables takeoff within a distance that is strictly less than the available distance TODA.

Last in figure 3d, is shown the case of a takeoff under an initial reduced power, with failure of a turbogenerator (occurring at V_{EF}), and an optimum compensation from the electric power sources, which enables takeoff within the available distance TODA.

Hence, the method of operating the power sources enables to take benefit from the actual available takeoff distance to reduce power delivered by the complementary power source, even in case of failure of a turbogenerator, which enables maintaining a longer service life.

## Claims

1. A hybrid aircraft power architecture (1), comprising:
- a plurality of electric power sources (10), comprising:
∘ At least two turbogenerators (11), each comprising an internal combustion engine (13) and at least one electrical generator (14), and
∘ At least one complementary electric power source (12),
- a plurality of electric propulsion units (20), connected to the plurality of electric power sources (10),
wherein the plurality of electric power sources are sized to enable the aircraft to takeoff under determined nominal conditions corresponding to a determined nominal takeoff power Pₙₒₘ wherein:
- when all electric power sources are operational, the determined nominal takeoff power Pₙₒₘ is delivered by:
∘at least two turbogenerators (11) delivering 75% to 90% of the nominal takeoff power Pₙₒₘ, each turbogenerator operating between 90% and 100% of its rated takeoff power, and
∘ at least one complementary electric power source (12) delivering the complement, each complementary electric power source (12) operating below 50% of its maximum deliverable power, and
- in case of failure of a turbogenerator during ground acceleration, a failure mode takeoff power P_{nom,f}, enabling the aircraft to takeoff despite the failure of the turbogenerator is delivered by:
∘ at least one turbogenerator (11) operating between 90% and 100% of its rated takeoff power, and
∘ at least one complementary power source (12), each delivering a power comprised strictly between the power it delivers when all electric power sources are operational and its maximum deliverable power.

2. The architecture according to claim 1, wherein the determined nominal conditions include a maximum aircraft takeoff weight, a nominal takeoff distance, a theoretical ambient temperature and altitude.

3. The architecture according to any of the preceding claims, comprising two turbogenerators (11) and four batteries (12).

4. The architecture according to any of the preceding claims, further comprising a controller (30) configured to operate the electric power sources (10) to deliver a determined takeoff power Pₜₒₜ.

5. The architecture according to the preceding claim, wherein the controller (30) is configured to operate the electric power sources (10) to deliver a takeoff power Pₜₒₜ selected among a nominal takeoff power Pₙₒₘ and a reduced takeoff power P_{red}, and the architecture further comprises a pilot-actuatable control device enabling selection by the pilot of the takeoff power among the nominal takeoff power and the reduced takeoff power.

6. The architecture according to the preceding claim, wherein the pilot-actuatable control device is integrated within the throttle (50) of the aircraft.

7. The architecture according to any of the preceding claims, further comprising a Human-Machine Interface (51) located within the cockpit and enabling input, by a pilot, of a reduced takeoff power value.

8. An aircraft comprising a hybrid power architecture (1) according to any of the preceding claims.

9. A method of powering an aircraft during takeoff, wherein the aircraft comprises a hybrid power architecture (1) according to any of the preceding claims,
the method comprising operating the electric power sources (10) during takeoff as follows:
- when all electric power sources are operational, the power sources (10) are operated to deliver a determined takeoff power Pₜₒₜ, said determined takeoff power being delivered by:
∘ at least two turbogenerators (11), each operating between 90% and 100% of its rated takeoff power, and
∘ at least one complementary electric power source (12) operating below 50% of its maximum deliverable power, and
- in case of failure of a turbogenerator (11) during ground acceleration, the power sources (11) are operated to deliver a failure mode takeoff power said failure mode takeoff power being delivered by:
∘ at least one turbogenerator (11) operating between 90 and 100% of its maximum deliverable power on the ground, and
∘at least one complementary power source (12), each delivering a power comprised strictly between the power it delivers when all sources are operational and its maximum deliverable power.

10. The method according to claim 10, wherein the determined takeoff power Pₜₒₜ is a nominal takeoff power Pₙₒₘ corresponding to nominal takeoff conditions.

11. The method according to claim 10, wherein the determined takeoff power Pₜₒₜ is a reduced takeoff power P_{red}, determined from an actual ambient temperature, actual runway altitude, actual aircraft takeoff weight for the considered flight, available runway length and any obstacle presence.

12. The method according to claim 10 or 12, wherein the determined takeoff power Pₜₒₜ is a reduced takeoff power, and the method comprises operating the electric power sources such that:
- in normal operation, the reduced takeoff power P_{red} is delivered by:
∘at least two turbogenerators (11), each operating between 90% and 100% of its maximum deliverable power on the ground, and
∘ at least one complementary electric power source (12), each operating below 40% of its maximum deliverable power, and
- in case of failure of a turbogenerator, a failure mode takeoff power is delivered by:
∘ at least one turbogenerator operating between 90% and 100% of its maximum deliverable power on the ground, and
∘ at least one complementary power source, each delivering a power comprised strictly between the power it delivers in normal operation and its maximum deliverable power.

13. The method according to any of claims 10 to 13, comprising a step of receiving a reduced takeoff power value input by a pilot, and receiving a request to operate takeoff at the received reduced takeoff power value.

14. The method according to any of claims 9 to 13, wherein, in case of failure of a turbogenerator (11), the power delivered by the at least one complementary power source (12) is equal to a value enabling the aircraft to takeoff despite the failure of the turbogenerator within a distance (TOD_OEI) equal to the takeoff distance without the turbogenerator failure, increased by a regulatory margin applied to the takeoff distance with all engines operating by the ASTM F3179-20 Standard Specification for Performance of Aircraft (TOD_AEO).

15. The method according to any of claims 9 to 13, wherein, in case of failure of a turbogenerator (11), the power delivered by the at least one complementary power source (12) is equal to a value enabling the aircraft to takeoff despite the failure of the turbogenerator within a distance (TOD_OEI) equal to the takeoff distance without the turbogenerator failure, increased by 15% (TOD_AEO).
